# EUROPEAN PATENT SPECIFICATION

(11) **EP 3 039 251 B1**
(45) Date of publication and mention of the grant of the patent: **01.11.2017**
(21) Application number: 14838961.2
(22) Date of filing: 16.07.2014
(51) Int. Cl.: F01D 11/14, F02C 7/20, F02K 3/06, F01D 11/08

(54) **GAS TURBINE ENGINE WITH FAN CLEARANCE CONTROL**
GASTURBINENMOTOR MIT GEBLÄSEABSTANDSSTEUERUNG
MOTEUR À TURBINE À GAZ DOTÉ D'UNE COMMANDE DE JEU DE VENTILATEUR

(30) Priority: 26.08.2013 US 201361869799 P
(43) Date of publication of application: 06.07.2016
(73) Proprietor: United Technologies Corporation, Farmington, CT 06032 (US)
(72) Inventor: SCHWARZ, Frederick M., Glastonbury, Connecticut 06033 (US)
(74) Representative: Leckey, David Herbert
(86) International application number: PCT/US2014/046784
(87) International publication number: WO 2015/030946

(56) References cited:
- EP-A2- 2 236 771
- EP-A2- 2 369 141
- US-A- 4 500 143
- US-A1- 2007 043 497
- US-A1- 2008 267 769
- US-A1- 2012 156 007
- US-A1- 2012 257 960

## Description

### CROSS-REFERENCE TO RELATED APPLICATION

This application claims priority to U.S. Provisional Application No. 61/869,799, filed August 26, 2013.

### BACKGROUND

This application relates to a fan rotor shifting system that provides clearance control for a gas turbine engine fan.

Gas turbine engines are known and, typically, include a fan delivering air into a compressor section. The air is compressed and then delivered into a combustor section where it is mixed with fuel and ignited. Products of this combustion pass downstream over turbine rotors driving them to rotate.

Historically, a single rotor may have driven a compressor section and a fan rotor at a single speed. This restricted the design of the fan, the compressor and the turbine.

More recently, it has been proposed to include a gear reduction between a fan drive turbine and the associated fan rotor. This allows the fan and the turbine to rotate at distinct speeds. With this change, a diameter of the fan rotor has increased. To accommodate the weight gain from the increased size fan, fan blades are becoming made of lighter materials, such as aluminium.

When made of aluminium, the fan blades are especially sensitive to heat and can expand during operation of the gas turbine engine. As the fan rotor and blades change size, a clearance between the fan blades and an outer housing can change and the efficiency of the gas turbine engine can decrease.

Similar problems can occur in the compressor and it has been proposed to shift compressor rotors to take up detected clearance or anticipated clearance. However, it has not been proposed to shift a fan rotor.

It has also been proposed to shift a housing outwardly of the compressor rotors to control clearance. Such systems are for example disclosed in EP 2 236 771 A2 or EP 2 369 141 A2. While it has been proposed to shift the housing associated with the fan, no system for facing the challenges that would occur during such movement has been disclosed.

Fan blades have been rotated to change a pitch angle, however, they have not been moved to take up undesired clearance.

### SUMMARY

In a featured embodiment, a fan section for use in a gas turbine engine has a fan rotor with a plurality of blades and an outer fan housing surrounding the plurality of blades, with a tip clearance defined between a radially outer tip of the blades and a radially inner surface of the fan housing. A fan drive shaft drives the rotor. A drive input drives the fan drive shaft. A shifting mechanism shifts a location of the blades relative to the drive input, thereby controlling the tip clearance.

In another embodiment according to the previous embodiment, the drive input is an output shaft of a gear reduction the drives the fan rotor.

In another embodiment according to any of the previous embodiments, a shifting mechanism shifts a first element to, in turn, move an outer race of a bearing axially. The outer race of the bearing, in turn, moves an inner race as it moves axially. The inner race is fixed for movement with the fan drive shaft. Axial movement of the inner race results in axial movement of the fan drive shaft to shift the location of the blades.

In another embodiment according to any of the previous embodiments, a lubricant supply system supplies lubricant to the bearing.

In another embodiment according to any of the previous embodiments, the lubricant supply system includes a plurality of lubrication tubes positioned radially inwardly of the drive input. The drive input has communication holes for supplying lubricant radially outwardly into mating lubricant holes within the fan drive shaft. Oil is supplied through the holes in the fan drive shaft to the bearing.

In another embodiment according to any of the previous embodiments, the first element is constrained to move axially and move with the outer race axially. The second element drives the first element to move axially, and is to rotate. There are mating teeth between the first and second elements.

In another embodiment according to any of the previous embodiments, there are a pair of bearing members between the inner and outer races. An axially inner bearing member has an axially outer end. The teeth on the second element extend axially inward of the axially outer end. An axially inner end of an axially outer bearing member is defined. The teeth on the second element extend axially outwardly of the axially inner end.

In another embodiment according to any of the previous embodiments, the mating teeth extend for the majority of an axial length occupied by the bearing.

In another embodiment according to any of the previous embodiments, the second element is driven to rotate by a rack and pinion device.

In another embodiment according to any of the previous embodiments, a control for the shifting mechanism receives clearance information from a sensor and also receives flight information, and determines a desired position for the blades based upon both the sensor information and the flight information.

In another featured embodiment, a gas turbine engine has a fan section, a compressor section, and a turbine section. The fan section includes a fan rotor having a plurality of blades and an outer fan housing surrounding the plurality of blades. A tip clearance is defined between a radially outer tip of the blades and a radially inner surface of the fan housing. A fan drive shaft drives the rotor. A drive input drives the fan drive shaft. A shifting mechanism shifts a location of the blades relative to the drive input thereby controlling the tip clearance.

In another embodiment according to the previous embodiment, the drive input is an output shaft of a gear reduction for driving the fan rotor.

In another embodiment according to any of the previous embodiments, a shifting mechanism shifts a first element to, in turn, move an outer race of a bearing axially. The outer race of the bearing, in turn, moves an inner race as it moves axially. The inner race is fixed for movement with the fan drive shaft. The axial movement of the inner race results in axial movement of the fan drive shaft to shift the location of the blades.

In another embodiment according to any of the previous embodiments, a lubricant supply system supplies lubricant to the bearing.

In another embodiment according to any of the previous embodiments, the lubricant supply system includes a plurality of lubrication tubes positioned radially inwardly of the drive input. The drive input has communication holes for supplying lubricant radially outwardly into mating lubricant holes within the fan drive shaft. Oil is supplied through the holes in the fan drive shaft to the bearing.

In another embodiment according to any of the previous embodiments, the first element is constrained to move axially and move with the outer race axially. A second element drives the first element to move axially, and is constrained to rotate. There are mating teeth between the first and second elements.

In another embodiment according to any of the previous embodiments, there are a pair of bearing members between the inner and outer races. An axially inner bearing member has an axially outer end. The teeth on the second element extend axially inward of the axially outer end. An axially inner end of an axially outer bearing member is defined. The teeth on the second element extend axially outwardly of the axially inner end.

In another embodiment according to any of the previous embodiments, the mating teeth extend for the majority of an axial length occupied by the bearing.

In another embodiment according to any of the previous embodiments, the second element is driven to rotate by a rack and pinion device.

In another embodiment according to any of the previous embodiments, a control for the shifting mechanism receives clearance information from a sensor and also receives flight information, and determines a desired position for the blades based upon both the sensor information and the flight information.

These and other features may be best understood from the following drawings and specification.

### BRIEF DESCRIPTION OF THE DRAWINGS

Figure 1 schematically shows a gas turbine engine.
Figure 2 shows a novel gas turbine engine.
Figure 3 shows a detail of the Figure 2 engine.

### DETAILED DESCRIPTION

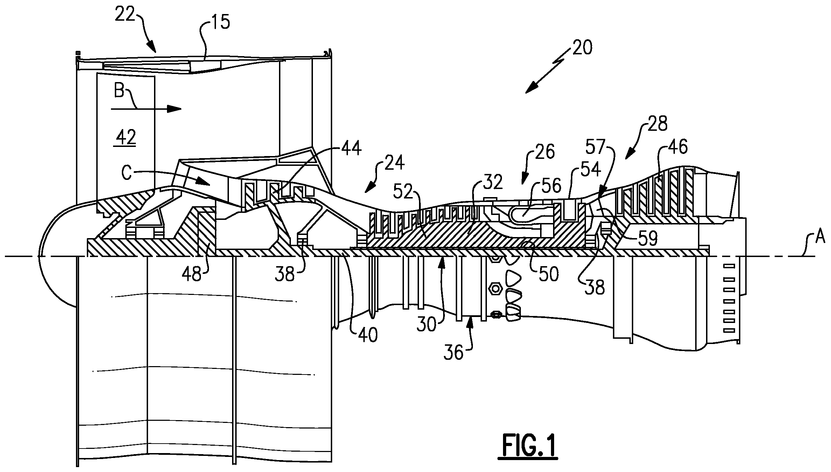

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second.

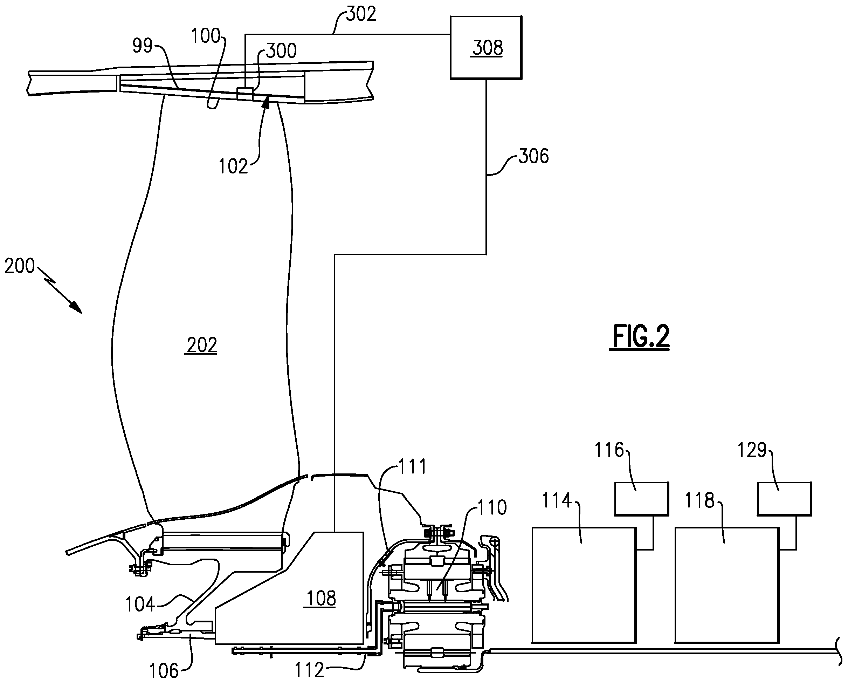

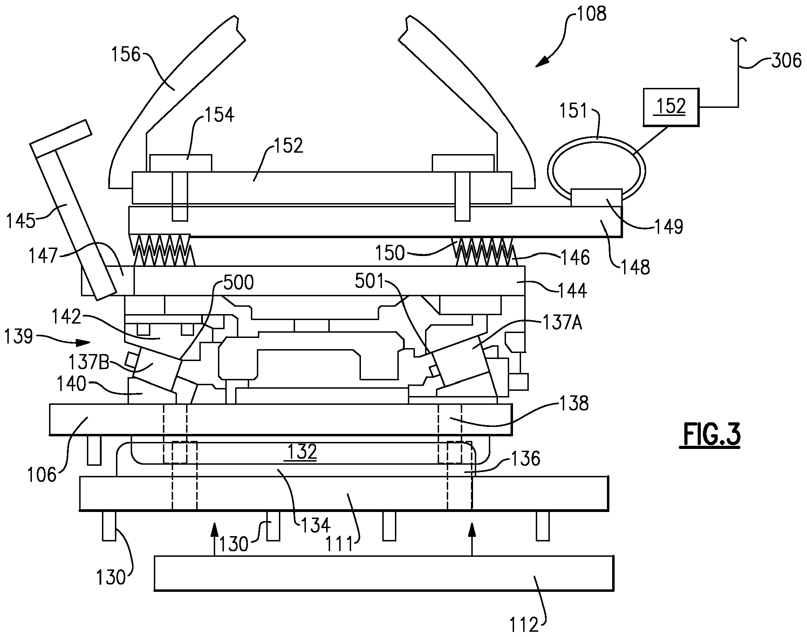

A fan blade shifting system 200 which may be incorporated into an engine, such as engine 20 of Figure 1, is illustrated in Figure 2. Fan blades 202 are driven through a gear reduction 110, as described above. An oil supply, such as supply tubes 112, delivers oil from the gear reduction 110 to a fan shift mechanism 108. The fan shift mechanism is described below with regard to Figure 3. However, as shown schematically in Figure 2, a drive input 111 from the gear reduction 110 provides a drive input into the fan shift mechanism and a fan drive shaft 106, in turn, drives a fan rotor 104 to rotate the fan blades 202.

A sensor 300 senses a clearance between a radially outer tip 102 of the fan blades 202 and a radially inner surface 100 of an outer housing 99. The sensor senses this clearance and provides a signal through line 302 to a controller 308, which may be a standalone controller or may be a full authority digital aircraft controller, as known.

The control 308 controls the shift mechanism 108 through a line 306. The control 308 may be provided with feedback from the operation of the engine, such as an indication of the thrust being demanded on the engine. The control 308 may thus anticipate changes in the clearance between surfaces 102 and 100 based upon engine operation and/or may be responsive to the sensor readings from sensor 300.

In addition, the control 308 may "learn" to anticipate clearance as engine operations changes by remembering clearance information that occurs during past engine operation. This will assist the control 308 in continuing to operate the system 108, even given the failure of a sensor 300.

As shown in Figure 2, similar shifting mechanisms 116 and 120 can be provided for shifting a low pressure compressor 114 and a high pressure compressor 118 relative to their housings. This structure may be as known in the art. However, the shifting of the fan rotor and both a low and high compressor rotor is not known in the prior art.

Shifting the fan rotor raises challenges that are not seen by shifting compressors rotors. This becomes particularly the case when a gear reduction, such as gear reduction 110, is utilized to drive a fan rotor. As an example, a gear reduction requires a "true" output shaft which is on an expected axis. By including the ability to shift the fan drive shaft 106, it becomes a challenge to ensure the output shaft is "true." In addition, with the use of the gear reduction, the outer diameter of the fan blades typically becomes greater. Thus, a "blade-out load" will also increase, and any shifting assembly must be able to accommodate such larger loads.

As is known, a drive connection between a fan drive turbine (such as turbine 46 shown in Figure 1) and the gear reduction 110 may be flexible.

The shifting mechanism 108 is illustrated in Figure 3. As shown, the supply tube 112 supplies oil radially outwardly against the drive input 111. The drive input 111 is driven by the gear reduction as shown schematically in Figure 2. Oil tubes 112 may be spaced circumferentially about an axis of rotation and generally are stationary. "Catching" features 130 are provided on an underside of the drive input 111 and deliver oil through a first set of oil holes 136 and into the fan drive shaft 106. A second set of holes 138 communicates with the first set of holes 136. From the second set of holes 138, the oil flows to a bearing 139.

As shown in Figure 3, spline teeth 134 are provided on the drive input 111 and mating spline teeth 132 are provided on the fan drive shaft 106. The oil supply holes 136/138 can be provided circumferentially intermediate the splines or could extend through selected portions of the splines.

During operation, lubricant will be provided from the spray tubes 112 through the holes 136/138 and to the inner race 140 of bearing 139. As known, the inner race 140 rotates with the fan drive shaft 106.

An outer race 142 of the bearing 139 does not rotate, as known. As shown in Figure 3, bearing members 137A and B are tapered and allow relative rotation of the inner race 140 relative to the outer race 142. As known, the bearing members 137A and B are located between races 140 and 142.

A shifting element 144 is fixed to move axially with the outer race 142. A plurality of slots 147 are provided in the shifting element 144 and receive connections 145 within the slots 147. The portions 145 are fixed to a frame of the engine. Thus, the element 144 is constrained to move axially, but is not allowed to rotate due to the frame connections 145.

As shown, a first set of teeth 146 mate with a second set of teeth 150 on a drive element 148. Drive element 148 is pinned at 154 to a non-rotating member 152 which is connected as shown schematically at 156 to the frame of the engine. Thus, the element 148 is allowed to rotate and drives the element 144 to move axially. When the element 144 moves axially, it moves the outer race 142 axially and this shifts the inner race 140, which moves the fan drive shaft 138 along the spline connection 132 and 134 and relative to the gear drive input 111.

In this manner, an axial location of the fan blades 202 changes. As can be appreciated from Figure 2, the surfaces 100 and 102 are generally conical. Thus, as the relative axial location of the blades 202 changes relative to the housing 99, the amount of clearance between surfaces 100 and 102 changes. Again, the control 308 could be programmed to anticipate or monitor a clearance and move the fan blades to achieve an ideal clearance during engine operation.

The element 148 has pinion teeth 149 and a rack drive 151 rotates the pinion teeth. A motor 152 is shown and communicates with the control through the line 306, as mentioned above.

As shown in Figure 3, a "wheel base" of the teeth 146 and 150 is relatively wide and covers the majority of an axial distance occupied by the bearing 139. More generally, the teeth 150 cover at least fifty (50) percent of the axial length of the bearing 139.

An axially inner one of the bearing members 137A has an axially outer end 501, and the teeth 150 extend axially inward of the outer end 501. Further, an axially inner end 500 of an axially outer bearing member 137B is defined, and the teeth 150 extend axially outwardly of the axially inner end 500.

The relatively wide wheel base for the teeth assists the fan shifting device 108 in reducing blade-out loads and wobbling loads which may otherwise occur with the relatively large fan as it experiences operational challenges and forces.

As a worker of ordinary skill in the art would recognize, the total distance that the blades would need to shift to provide the disclosed function is very small. For example, the total shifting may be less than 1.0 inch (2.54 cm), even in a very large gas turbine engine.

Although an embodiment of this invention has been disclosed, a worker of ordinary skill in this art would recognize that certain modifications would come within the scope of this disclosure as defined by the appended claims.

## Claims

1. A fan section (22) for use in a gas turbine engine comprising:
a fan rotor (104) having a plurality of blades (202) and an outer fan housing (99) surrounding said plurality of blades (202), with a tip clearance defined between a radially outer tip (102) of said blades (202) and a radially inner surface (100) of said fan housing (99);
a fan drive shaft (106) for driving said rotor (104);
a drive input (111) for driving said fan drive shaft; and
a shifting mechanism (108) for shifting a location of said blades (202) relative to said drive input, thereby controlling the tip clearance.

2. The fan section as set forth in claim 1, wherein said drive input (111) is an output shaft of a gear reduction (110) for driving said fan rotor (104).

3. The fan section as set forth in claim 2, wherein a shifting mechanism shifts a first element (144) to, in turn, move an outer race (142) of a bearing (139) axially, said outer race (142) of said bearing (139), in turn, moving an inner race (140) as it moves axially, said inner race (140) being fixed for movement with said fan drive shaft (106), and axial movement of said inner race (140) resulting in axial movement of said fan drive shaft (106) to shift the location of the blades (202).

4. The fan section as set forth in claim 3, wherein a lubricant supply system supplies lubricant to said bearing (139).

5. The fan section as set forth in claim 4, wherein said lubricant supply system includes a plurality of lubrication tubes (112) positioned radially inwardly of said drive input (111) and said drive input (111) having communication holes (136) for supplying lubricant radially outwardly into mating lubricant holes within said fan drive shaft (106) and oil being supplied through said holes in said fan drive shaft (106) to said bearing (139).

6. The fan section as set forth in claim 3, 4 or 5, wherein said first element (144) is constrained to move axially and move with said outer race (142) axially, and a second element (148) driving said first element (144) to move axially, said second element (148) being constrained to rotate, and there being mating teeth (146) between said first and second elements (144,148).

7. The fan section as set forth in claim 6, wherein there are a pair of bearing members (137A,137B) between said inner and outer races (140,142), an axially inner bearing member (137A) has an axially outer end (501), and the teeth (150) on said second element (148) extend axially inward of said axially outer end (501), an axially inner end (500) of an axially outer bearing member (137B) is defined, and said teeth (150) on said second element (148) extend axially outwardly of said axially inner end (500).

8. The fan section as set forth in claim 6 or 7, wherein said mating teeth (146) extend for the majority of an axial length occupied by said bearing (139).

9. The fan section as set forth in claim 6, 7 or 8, wherein said second element (148) is driven to rotate by a rack and pinion device (149,151).

10. The fan section as set forth in any preceding claim, wherein a control (308) for said shifting mechanism (108) receives clearance information from a sensor (300) and also receives flight information, and determines a desired position for said blades (202) based upon both said sensor information and said flight information.

11. A gas turbine engine comprising:
a fan section (22) as set forth in any preceding claim, a compressor section (24), and a turbine section (28).

12. A gas turbine engine (20) comprising:
a fan section (22), a compressor section (24) including at least a first and second compressor rotor, and a turbine section (28), said fan section (22) having a rotor (104) and fan blades (202), and there being an outer fan housing (99), and there being an adjustment mechanism for moving said fan rotor (104) relative to said outer fan housing to control a clearance between an outer periphery of said fan blades (202) and an inner periphery of said outer fan housing (99); and
each of said first and second compressor rotors being surrounded by a compressor housing, and there being an adjustment mechanism for adjusting a position of each of said first and second compressor rotors relative to a respective one of said compressor housings to control a clearance between a radially outer surface on compressor blades in each of said first and second compressor rotors and a radially inner surface of said compressor housings.

## Patentansprüche

1. Gebläseabschnitt (22) zum Nutzen in einem Gasturbinenmotor, der Folgendes umfasst:
einen Gebläserotor (104), der eine Vielzahl von Blättern (202) aufweist und ein äußeres Gebläsegehäuse (99), das die Vielzahl von Blättern (202) umgibt, mit einem Schaufelspalt, definiert zwischen einer radial äußeren Spitze (102) der Blätter (202) und einer radial inneren Fläche (100) des Gebläsegehäuse (99);
eine Gebläse-Antriebswelle (106) zum Antreiben des Rotors (104);
einen Antriebseingang (111) zum Antrieb der Gebläse-Antriebswelle; und
einen Verstellmechanismus (108) zum Verstellen der Position der Blätter (202) relativ zum Antriebseingang, wodurch der Schaufelspalt gesteuert wird.

2. Gebläseabschnitt nach Anspruch 1, wobei der Antriebseingang (111) eine Ausgangswelle einer Getriebeuntersetzung (110) zum Antreiben des Gebläserotors (104) ist.

3. Gebläseabschnitt nach Anspruch 2, wobei ein Verstellmechanismus ein erstes Element (144) verstellt, das wiederum einen Außenring (142) eines Lagers (139) axial bewegt, wobei der Außenring (142) des Lagers (139) während er sich axial bewegt wiederum einen Innenring (140) bewegt, wobei der Innenring (140) zur Bewegung mit der Gebläse-Antriebswelle (106) fixiert ist, und wobei axiale Bewegung dieses Innenrings (140) zu axialer Bewegung der Gebläse-Antriebswelle (106) führt, um so die Position der Blätter (202) zu verstellen.

4. Gebläseabschnitt nach Anspruch 3, wobei ein Schmiermittelversorgungssystem Schmiermittel an das Lager (139) liefert.

5. Gebläseabschnitt nach Anspruch 4, wobei das Schmiermittelversorgungssystem eine Vielzahl an Schmierleitungen (112) aufweist, die radial innenliegend des Antriebseingangs (111) angebracht sind, wobei der Antriebseingang (111) Verbindungslöcher (136) zum Liefern von Schmiermittel radial nach außen in ineinandergreifende Schmierbohrungen innerhalb der Gebläse-Antriebswelle (106) aufweist, und wobei Öl durch die Bohrungen in die Gebläse-Antriebswelle (106) zum Lager (139) geliefert wird.

6. Gebläseabschnitt nach Anspruch 3, 4 oder 5, wobei die Bewegung des ersten Elementes (144) so eingeschränkt ist, dass es sich nur axial und mit dem Außenring axial (142) bewegen kann, und wobei ein zweites Element (148) das erste Element (144) zum axialen Bewegen antreibt, wobei die Bewegung des zweiten Elementes (148) so eingeschränkt ist, dass es sich nur drehen kann, und wobei es zwischen dem ersten und dem zweiten Element (144, 148) kämmende Zähne (146) gibt.

7. Gebläseabschnitt nach Anspruch 6, wobei es ein Paar Lagerelemente (137A, 137B) zwischen dem Innen- und dem Außenring (140, 142) gibt, wobei ein axiales Innenlagerelement (137A) ein axiales Außenende (501) aufweist, und wobei sich die Zähne (150) auf dem zweiten Element (148) axial nach innen auf dem axialen Außenende (501) erstrecken, wobei ein axiales Innenende (500) eines axialen Außenlagerelementes (137B) definiert ist, und die Zähne (150) des zweiten Elementes (148) sich axial nach außen von dem axialen Innenende (500) erstrecken.

8. Gebläseabschnitt nach Anspruch 6 oder 7, wobei die kämmenden Zähne (146) sich auf dem Großteil der axialen Länge erstrecken, die vom Lager (139) eingenommen wird.

9. Gebläseabschnitt nach Anspruch 6, 7 oder 8, wobei das zweite Element (148) zum Drehen von einer Zahnstangengetriebevorrichtung (149, 151) angetrieben wird.

10. Gebläseabschnitt nach einem der vorhergehenden Ansprüche, wobei eine Steuerung (308) für den Verstellmechanismus (108) Abstandsinformationen von einem Sensor (300) erhält und ebenfalls Fluginformationen erhält, und eine gewünschte Position für die Blätter (202) bestimmt, auf Grundlage sowohl der Sensorinformationen als auch der Fluginformationen.

11. Gasturbinenmotor, der Folgendes umfasst:
einen Gebläseabschnitt (22) nach einem der vorhergehenden Ansprüche, einen Kompressorabschnitt (24), und einen Turbinenabschnitt (28).

12. Gasturbinenmotor (20), der Folgendes umfasst:
einen Gebläseabschnitt (22), einen Kompressorabschnitt (24), der mindestens einen ersten und einen zweiten Kompressor-Rotor aufweist, und einen Turbinenabschnitt (28), wobei der Gebläseabschnitt (22) einen Rotor (104) und Gebläseblätter (202) aufweist, wobei es ein äußeres Gebläsegehäuse (99) gibt, und wobei es einen Anpassungsmechanismus zum Bewegen des Gebläserotors (104) relativ zum äußeren Gebläsegehäuse zur Steuerung eines Abstandes zwischen einem Außenumfang der Gebläseblätter (202) und einem Innenumfang des äußeren Gebläsegehäuses (99) gibt; und
wobei jeder der ersten und zweiten Kompressor-Rotoren von einem Kompressorgehäuse umgeben ist, wobei es einen Anpassungsmechanismus zur Anpassung der Position der ersten und zweiten Kompressor-Rotoren im Verhältnis zu jeweils einem der Kompressorgehäuse gibt, um einen Abstand zwischen einer radialen Außenfläche auf Kompressorblättern in jedem der ersten und zweiten Kompressorrotoren und einer radialen Innenfläche des Kompressorgehäuse zu steuern.

## Revendications

1. Section de ventilateur (22) destinée à être utilisée dans un moteur à turbine à gaz comprenant :
un rotor de ventilateur (104) comprenant une pluralité de pales (202) et un boîtier de ventilateur externe (99) entourant ladite pluralité de pales (202), avec un jeu de pointe défini entre une pointe radialement externe (102) desdites pales (202) et une surface radialement interne (100) dudit boîtier de ventilateur (99) ;
un arbre d'entraînement de ventilateur (106) pour entraîner ledit rotor (104) ;
une entrée d'entraînement (111) pour entraîner ledit arbre d'entraînement de ventilateur ; et
un mécanisme de modification (108) pour modifier un emplacement desdites pales (202) par rapport à ladite entrée d'entraînement, commandant ainsi le jeu de pointe.

2. Section de ventilateur selon la revendication 1, dans laquelle ladite entrée d'entraînement (111) est un arbre de sortie d'un couple réducteur (110) pour entraîner ledit rotor de ventilateur (104).

3. Section de ventilateur selon la revendication 2, dans laquelle un mécanisme de modification modifie un premier élément (144) pour, à son tour, déplacer un chemin de roulement externe (142) d'un roulement (139) axialement, ledit chemin de roulement externe (142) dudit roulement (139), à son tour, déplaçant un chemin de roulement interne (140) lorsqu'il se déplace axialement, ledit chemin de roulement interne (140) étant fixé pour un mouvement avec ledit arbre d'entraînement de ventilateur (106), un mouvement axial dudit chemin de roulement interne (140) résultant en un mouvement axial dudit arbre d'entraînement de ventilateur (106) pour modifier l'emplacement des pales (202).

4. Section de ventilateur selon la revendication 3, dans laquelle un système d'alimentation en lubrifiant alimente ledit roulement (139) en lubrifiant.

5. Section de ventilateur selon la revendication 4, dans laquelle ledit système d'alimentation en lubrifiant comprend une pluralité de tubes de lubrification (112) positionnés radialement vers l'intérieur de ladite entrée d'entraînement (111) et ladite entrée d'entraînement (111) comprenant des trous de communication (136) permettant de fournir un lubrifiant radialement vers l'extérieur dans des trous de lubrifiant correspondants à l'intérieur dudit arbre d'entraînement de ventilateur (106) et de l'huile étant fournie par le biais desdits trous dans ledit arbre d'entraînement de ventilateur (106) audit roulement (139).

6. Section de ventilateur selon la revendication 3, 4 ou 5, dans laquelle ledit premier élément (144) est limité pour se déplacer axialement et pour se déplacer avec ledit chemin de roulement externe (142) axialement, et un second élément (148) entraînant ledit premier élément (144) en déplacement axial, ledit second élément (148) étant limité pour tourner, et des dents correspondantes (146) étant présentes entre lesdits premier et second éléments (144, 148).

7. Section de ventilateur selon la revendication 6, dans laquelle une paire d'éléments de roulement (137A, 137B) est présente entre lesdits chemins de roulement interne et externe (140, 142), un élément de roulement axialement interne (137A) comprend une extrémité axialement externe (501), et les dents (150) sur ledit second élément (148) s'étendent axialement vers l'intérieur de ladite extrémité axialement externe (501), une extrémité axialement interne (500) d'un élément de roulement axialement externe (137B) est définie, et lesdites dents (150) sur ledit second élément (148) s'étendent axialement vers l'extérieur de ladite extrémité axialement interne (500).

8. Section de ventilateur selon la revendication 6 ou 7, dans laquelle lesdites dents correspondantes (146) s'étendent sur la majorité d'une longueur axiale occupée par ledit roulement (139).

9. Section de ventilateur selon la revendication 6, 7 ou 8, dans laquelle ledit second élément (148) est entraîné en rotation par un dispositif à pignon et crémaillère (149, 151).

10. Section de ventilateur selon une quelconque revendication précédente, dans laquelle une commande (308) pour ledit mécanisme de modification (108) reçoit des informations de jeu d'un capteur (300) et reçoit également des informations de vol, et détermine une position souhaitée pour lesdites pales (202) sur la base desdites informations de capteur et desdites informations de vol.

11. Moteur à turbine à gaz comprenant :
une section de ventilateur (22) selon une quelconque revendication précédente, une section de compresseur (24), et une section de turbine (28).

12. Moteur à turbine à gaz (20) comprenant :
une section de ventilateur (22), une section de compresseur (24) comprenant au moins des premier et second rotors de compresseur, et une section de turbine (28), ladite section de ventilateur (22) comprenant un rotor (104) et des pales de ventilateur (202), et un boîtier de ventilateur externe (99) étant présent, et un mécanisme de réglage permettant de déplacer ledit rotor de ventilateur (104) par rapport audit boîtier de ventilateur externe étant présent pour commander un jeu entre une périphérie externe desdites pales de ventilateur (202) et une périphérie interne dudit boîtier de ventilateur externe (99) ; et
chacun desdits premier et second rotors de compresseur étant entouré par un boîtier de compresseur, et un mécanisme de réglage étant présent pour régler une position de chacun desdits premier et second rotors de compresseur par rapport à un boîtier de compresseur respectif desdits boîtiers de compresseur pour commander un jeu entre une surface radialement externe sur des pales de compresseur dans chacun desdits premier et second rotors de compresseur et une surface radialement interne desdits boîtiers de compresseur.
